# EUROPÄISCHE PATENTSCHRIFT

(11) **EP 3 130 484 B1**
(45) Veröffentlichungstag und Bekanntmachung des Hinweises auf die Patenterteilung: **16.05.2018**
(21) Anmeldenummer: 16158362.0
(22) Anmeldetag: 03.03.2016
(51) Int. Cl.: B60C 11/13, B60C 11/03

(54) **FAHRZEUGLUFTREIFEN**
PNEUMATIC TYRE FOR A VEHICLE
PNEUMATIQUE DE VÉHICULE

(30) Priorität: 24.07.2015 DE 102015214000
(43) Veröffentlichungstag der Anmeldung: 15.02.2017
(73) Patentinhaber: Continental Reifen Deutschland GmbH, 30165 Hannover (DE)
(72) Erfinder: Szeib, Hendrik, 30419 Hannover (DE); Röger, Bernhard, 30823 Garbsen (DE); Özüduru, Ahmet, 30419 Hannover (DE); Pagac, Lubomir, 020 01 Puchov (SK)
(74) Vertreter: Finger, Karsten

(56) Entgegenhaltungen:
- EP-A1- 2 522 531
- EP-A2- 2 586 628
- WO-A1-2015/059851
- DE-A1-102012 109 712

## Beschreibung

Die Erfindung betrifft einen Fahrzeugluftreifen in Radialbauart mit einem Laufstreifen mit einem durch eine Umfangsrille laufstreifeninnenseitig begrenzten schulterseitigen Laufstreifenbereich, welcher 15% bis 30% der Breite der Bodenaufstandsfläche einnimmt und eine an die Umfangsrille angrenzende Umfangsrippe sowie ein durch Querrillen blockartig strukturiertes schulterseitiges Laufstreifenband umfasst, wobei jede Querrille in axialer Richtung in einem Abstand von vorzugsweise mindestens 8,0 mm vor der Umfangsrille endet und wobei jede Querrille einen innerhalb der und über die Bodenaufstandsfläche hinaus verlaufenden Hauptabschnitt aufweist. Ein Fahrzeugluftreifen nach dem Oberbegriff des Anspruchs 1 ist z.B. aus der Druckschrift DE 10 2012 109 712 A1 bekannt. Es ist bekannt und üblich, Laufstreifen von Fahrzeugluftreifen in ihren schulterseitigen Bereichen mit zumindest im Wesentlichen unstrukturierten Umfangsrippen zu versehen. Derartige Umfangsrippen weisen eine hohe Steifigkeit auf, welche beim Fahren eine gute Übertragung von Seitenkräften auf den Untergrund gewährleistet. An diese Umfangsrippe schließt laufstreifenaußenseitig meist ein mit Querrillen blockartig strukturierter Laufstreifenbereich an, welcher infolge der Querrillen gegenüber der Umfangsrippe eine deutlich geringere Steifigkeit aufweist. Die deutlich voneinander abweichenden Steifigkeiten dieser Laufstreifenbereiche können ein ungleichmäßiges Abriebbild des Laufstreifens zur Folge haben. Dabei wird der steifere Laufstreifenbereich zuerst abgefahren. Weniger steife Laufstreifenbereiche können unter Krafteinwirkung leichter nachgeben und werden daher weniger stark abgerieben.

Der Erfindung liegt daher die Aufgabe zugrunde, einen Fahrzeugluftreifen der eingangs genannten Art derart zu gestalten, dass der Laufstreifenabrieb in den schulterseitigen Laufstreifenbereichen gleichmäßiger wird.

Die gestellte Aufgabe wird erfindungsgemäß dadurch gelöst, dass jede Querrille zwei jeweils an das laufstreifeninnenseitige Ende ihres Hauptabschnittes anschließende Endabschnitte aufweist, welche der Querrille in Draufsicht eine Y-artige Gestalt verleihen, wobei die Umfangsrippe in die zwischen den Endabschnitten einer Querrille liegenden Bereiche in Draufsicht jeweils dreieckförmig hineinragt.

Durch die Y-artig gestalteten Querrillen wird das Steifigkeitsniveau der Umfangsrippe des schulterseitigen Laufstreifenbereiches an jenes des an die Umfangsrippe angrenzenden blockartig strukturierten Laufstreifenbandes gut angenähert. Laufstreifen mit erfindungsgemäßen Querrillen weisen in ihren schulterseitigen Bereichen daher eine weitgehend homogene Steifigkeitsverteilung auf, wodurch das Abriebbild des Laufstreifens wesentlich gleichmäßiger wird. Zusätzlich begünstigen die erfindungsgemäß ausgeführten Querrillen beim Fahren auf nasser Fahrbahn die Aquaplaningeigenschaften, da Wasser aus dem Bereich der Umfangsrippe über die beiden laufstreifeninnseitigen Endabschnitte der Querrillen besonders effektiv zum Hauptabschnitt und damit über die Bodenaufstandsfläche hinaus geleitet werden kann.

Bei einer besonders vorteilhaften Ausführungsform der Erfindung endet der Hauptabschnitt in axialer Richtung in einem Abstand von 20,0 mm bis 30,0 mm vor der die Umfangsrippe laufstreifeninnenseitig begrenzenden Umfangsrille. Diese Maßnahme ist für einen besonders sanften Übergang der Steifigkeitsniveaus zwischen jenem Bereich, der blockartig strukturiert ist und jenem, der eine Umfangsrippe bildet, von Vorteil.

Bei einer weiteren, besonders bevorzugten Ausführung sind die beiden Endabschnitte bezüglich der Umfangsrichtung des Laufstreifens gegensinnig geneigt. Auch diese Maßnahme ist für eine Optimierung des Steifigkeitsverlaufes von Vorteil und begünstigt ein gutes Wasserdrainagevermögen der Querrillen. Besonders günstig ist dabei, wenn die beiden Endabschnitte in axialer Richtung in im Wesentlichen gleich großen Abständen vor der die Umfangsrippe laufstreifeninnenseitig begrenzenden Umfangsrille enden.

In diesem Zusammenhang ist es ferner vorteilhaft, wenn gemäß der Erfindung jeder dreieckige Bereich der Umfangsrippe an der Laufstreifenoberfläche zur jeweiligen Querrille durch zwei Begrenzungskanten begrenzt ist, welche einen Winkel einschließen, der 60° bis 120°, vorzugsweise 80° bis 100° und besonders bevorzugt 85° bis 95°, beträgt.

Für die Aquaplaningeigenschaften des Laufstreifens ist es ferner besonders vorteilhaft, wenn die Tiefe jedes Endabschnittes zum laufstreifeninnenseitigen Ende abnimmt und wenn sich einer der Endabschnitte zumindest im Wesentlichen in Fortsetzung des Hauptabschnittes erstreckt.

Besondere Details der Ausgestaltung des zumindest im Wesentlichen in Fortsetzung des Hauptabschnittes verlaufenden Endabschnittes sind für eine Optimierung des Aquaplaningverhaltens besonders vorteilhaft. Bei einer dieser Maßnahmen ist vorgesehen, dass dieser Endabschnitt in seiner Erstreckungsrichtung einen unter einem Winkel von 30° bis 50°, insbesondere von 35° bis 45°, zur radialen Richtung verlaufenden Rillengrund aufweist, welcher Richtung Endabschnittende ansteigt. Die Tiefe des Endabschnittes am laufstreifeninnenseitigen Ende des Rillengrundes beträgt 4,0 mm bis 5,0 mm. Eine weitere, vorteilhafte Maßnahme besteht darin, dass am laufstreifeninnenseitigen Ende dieses Endabschnittes zwischen dem Rillengrund und der Laufstreifenoberfläche eine Flanke verläuft, welche zur radialen Richtung unter einem Winkel von bis zu 5°, insbesondere von bis zu 2°, verläuft.

Der zweite Endabschnitt wird bevorzugt ebenfalls besonders ausgestaltet, um eine optimale Wasserableitung zu gewährleisten. Insbesondere weist der Rillengrund dieses Endabschnittes einen besonderen Verlauf zwischen dem Hauptabschnitt und seinem Ende auf. Der Rillengrund verläuft entlang mehrerer Abschnitte, insbesondere weist er einen an den Hauptabschnitt anschließenden radial inneren Abschnitt, einen mittleren Abschnitt und einen radial äußeren Abschnitt auf, wobei der radial innere Abschnitt unter einem Winkel von 20° bis 60°, insbesondere bis zu 45°, und der mittlere Abschnitt unter einem Winkel von 15° bis 25°, vorzugsweise bis zu 20°, zur radialen Richtung verläuft. Der radial äußere Abschnitt verläuft in einer Tiefe von 1,5 mm bis 2,5 mm, vorzugsweise von 3,0 mm, und zumindest im Wesentlichen parallel zur Laufstreifenoberfläche.

Bei einer weiteren Ausführungsvariante der Erfindung ist die Umfangsrippe entlang der Umfangsrille mit Aussparungen versehen, welche den Querrillen zumindest im Wesentlichen gegenüberliegen und in Draufsicht jeweils im Wesentlichen in Form eines Dreieckes ausgebildet sind. Auch diese Aussparungen sind für den erwünschten Steifigkeitsverlauf im erfindungsgemäß gestalteten Laufstreifenbereich von Vorteil. Besonders bevorzugt ist eine Ausführung, bei der jede Aussparung eine in Draufsicht im Wesentlichen dreieckige Bodenfläche aufweist, welche gegenüber der Laufstreifenoberfläche geneigt ist, wobei die Aussparung entlang der einen, innerhalb der Umfangsrippe liegenden Seite der Bodenfläche in radialer Richtung ihre geringste Tiefe, welche 3,5 mm bis 4,5 mm beträgt, aufweist.

Weitere Merkmale, Vorteile und Einzelheiten der Erfindung werden nun anhand der Zeichnung, die schematisch mehrere Ausführungsbeispiele der Erfindung darstellt, näher beschrieben. Dabei zeigen
Fig. 1 bis Fig. 4 Draufsichten auf einen Ausschnitt eines Laufstreifens eines Fahrzeugluftreifens mit je einer Ausführungsvariante gemäß der Erfindung,
Fig. 5 bis Fig. 8 Schnittdarstellungen entlang der Linien V-V bis VIII-VIII der Fig. 1 bis Fig. 4 und
Fig. 9 eine Schnittdarstellung entlang der Linie IX-IX der Fig. 2 bzw. der Fig. 4.

Die Erfindung befasst sich mit speziell gestalteten schulterseitigen Laufstreifenbereichen von Fahrzeugluftreifen in Radialbauart, insbesondere von Van-Reifen, vorzugsweise von Wohnmobilreifen ("Camperreifen").

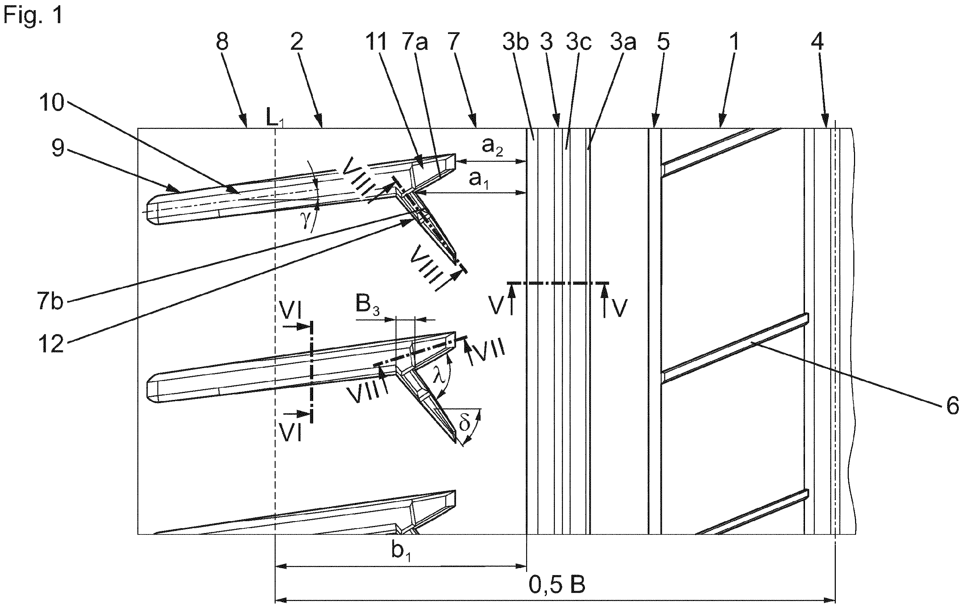

Die Fig. 1 bis Fig. 4 zeigen jeweils die eine Hälfte eines Laufstreifens eines Fahrzeugluftreifens mit einem Profilband 1, einem schulterseitigen Laufstreifenbereich 2, einer das Profilband 1 und den Laufstreifenbereich 2 voneinander trennenden Umfangsrille 3 sowie einer das Profilband 1 laufstreifeninnenseitig begrenzenden Umfangsrille 4, von welcher nur ein Teilbereich zu sehen ist. Die zweite Laufstreifenhälfte ist vorzugsweise mit übereinstimmenden Profilstrukturen versehen.

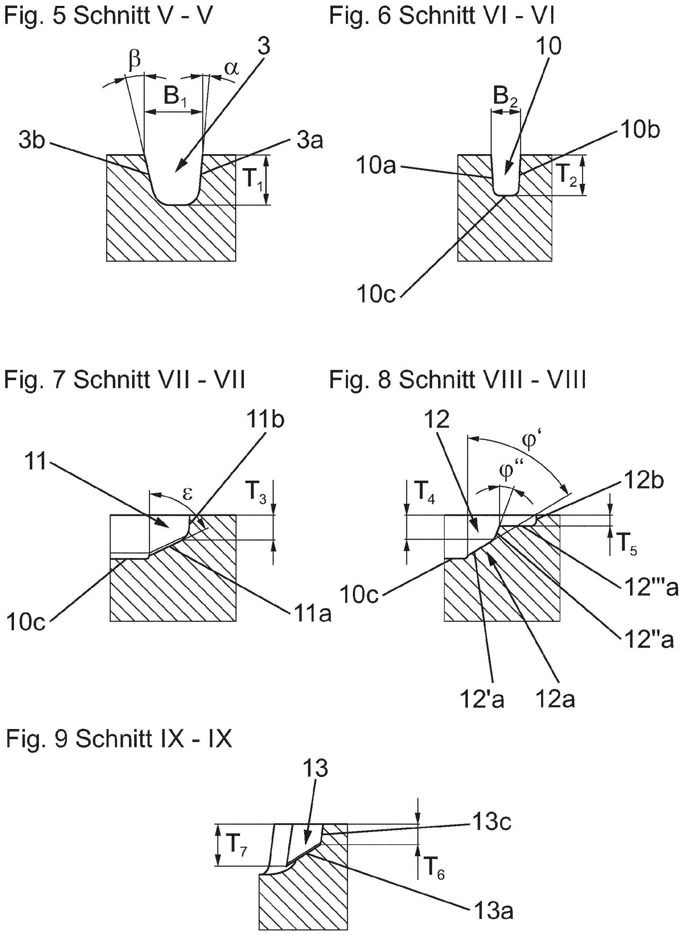

Die bei den gezeigten Ausführungsvarianten im Wesentlichen gerade in Umfangsrichtung verlaufende Umfangsrille 3 weist Rillenflanken 3a, 3b und einen Rillengrund 3c auf. Gemäß Fig. 5 weist die Umfangsrille 3 in radialer Richtung eine Tiefe T₁ von vorzugsweise 7,5 mm bis 8,5 mm auf, wobei die Tiefe T₁ der für den jeweiligen Fahrzeugluftreifen vorgesehenen maximalen Profiltiefe entspricht. An der Laufstreifenoberfläche weist die Umfangsrille 3 eine Breite B₁ von vorzugsweise 6,0 mm bis 8,0 mm auf. Die Rillenflanke 3a verläuft unter einem Winkel α von vorzugsweise bis zu 10° zur radialen Richtung. Die Rillenflanke 3b verläuft unter einem Winkel β von 10° bis 20°, vorzugsweise von etwa 14°, zur radialen Richtung, wobei der Winkel β größer ist als der Winkel α.

Wie Fig. 1 bis Fig. 4 zeigen, weist das Profilband 1 beispielsweise eine gegenüber der Umfangrille 3 schmäler und seichter ausgeführte Umfangsrille 5 sowie eine Vielzahl von zwischen den beiden Umfangsrillen 4, 5 parallel zueinander verlaufender Querrillen 6 auf. Die Querrillen 6 verlaufen jeweils unter einem spitzen Winkel von vorzugsweise bis zu 45° zur Umfangsrichtung.

Der laufstreifenaußenseitige Rand der Bodenaufstandsfläche des Laufstreifens ist durch eine in Umfangsrichtung verlaufende Linie L₁ gekennzeichnet. Innerhalb der Bodenaufstandsfläche weist der Laufstreifenbereich 2 in axialer Richtung eine Breite b₁ von 15% bis 30%, insbesondere von etwa 25%, der Breite B der Bodenaufstandsfläche auf, wobei die Breite B dem statisch ermittelten Footprint gemäß E.T.R.T.O.-Standards (Last bei 70% der Tragfähigkeit, Innendruck je nach Tragfähigkeitsklasse) entspricht.

Der Laufstreifenbereich 2 umfasst eine Umfangsrippe 7 und ein blockartig strukturiertes schulterseitiges Laufstreifenband 8. Im Laufstreifenbereich 2 sind speziell gestaltete Querrillen 9 vorgesehen, welche jeweils einen auch über die Bodenaufstandsfläche hinausverlaufenden Hauptabschnitt 10 und zwei laufstreifeninnenseitige Endabschnitte 11, 12 aufweisen. In Umfangsrichtung benachbarte Querrillen 9 weisen im Bereich ihrer Hauptabschnitte 10 in Umfangsrichtung voneinander die üblichen Abstände von vorzugsweise 20,0 mm bis 40,0 mm auf.

Der Hauptabschnitt 10 verläuft zumindest im Wesentlichen gerade sowie in Draufsicht unter einem spitzen Winkel γ von bis zu 30°, insbesondere von höchstens 10°, zur axialen Richtung und endet an der Umfangsrippe 7 in einem in axialer Richtung gemessenen Abstand a₁ von 20,0 mm bis 30,0 mm vor der die Umfangsrippe 7 begrenzenden Umfangsrille 3. Die Endabschnitte 11, 12 schließen jeweils am laufstreifeninnenseitigen Ende des Hauptabschnittes 10 an und verleihen der Querrille 9 in Draufsicht eine Y-artige Gestalt, wobei die Umfangsrippe 7 in die zwischen den Endabschnitten 11, 12 einer Querrille 9 liegenden Bereiche in Draufsicht jeweils dreieckförmig hineinragt. Jeder dreieckförmige Bereich ist zur jeweiligen Querrille 9 an der Laufstreifenoberfläche durch zwei einen Winkel λ einschließende Begrenzungskanten 7a, 7b begrenzt. Der Winkel λ beträgt 60° bis 120°, vorzugsweise 80° bis 100°, und besonders bevorzugt 85° bis 95°. Die Endabschnitte 11, 12 enden laufstreifeninnenseitig jeweils in einem in axialer Richtung vorliegenden Abstand a₂ < a₁ vor der Umfangsrille 3, wobei der Abstand a₂ vorzugsweise mindestens 8,0 mm beträgt. Die Endabschnitte 11, 12 können auch in insbesondere um bis zu 3,0 mm voneinander abweichenden Abständen vor der Umfangsrille 3 enden.

Gemäß Fig. 6 weist jeder Hauptabschnitt 10 an der Laufstreifenoberfläche eine Breite B₂ von 3,0 mm bis 6,0 mm auf, welche bei den gezeigten Ausführungsvarianten im Bereich der Bodenaufstandsfläche vom laufstreifenaußenseitigen Ende des Hauptabschnittes 10 zum laufstreifeninnseitigen Ende des Hauptabschnittes 10 kontinuierlich zunimmt (Fig. 1). Der Hauptabschnitt 10 weist im schulterseitig auslaufenden Bereich in radialer Richtung eine kontinuierlich geringer werdende Tiefe auf, innerhalb der Bodenaufstandsfläche beträgt seine Tiefe T₂ zumindest 60% der Tiefe T₁ (Fig. 5) der Umfangsrille 3. Der Hauptabschnitt 10 ist durch zwei Rillenflanken 10a, 10b und einen Rillengrund 10c begrenzt, wobei die Rillenflanken 10a, 10b jeweils unter einem kleinen Winkel von beispielsweise 4° zur radialen Richtung verlaufen.

Die Endabschnitte 11, 12 weisen, wie nachfolgend genauer erläutert wird, einen speziellen Tiefen- und Breitenverlauf auf. Gemäß Fig. 1 bis Fig. 4 setzt sich im Endabschnitt 11 die Rillenflanke 10a (Fig. 6) des Hauptabschnittes 10 bis zur Umfangsrippe 7 fort, sodass sich der Endabschnitt 11 in Draufsicht zumindest im Wesentlichen unter dem Winkel γ erstreckt. Die an der Laufstreifenoberfläche gemessene Breite des Endabschnittes 11 nimmt ausgehend vom Hauptabschnitt 10 bis zum laufstreifeninnenseitigen Ende des Endabschnittes 11 kontinuierlich auf insbesondere 30% bis 60% der Breite B₂ ab.

Gemäß Fig. 7, welche einen in Erstreckungsrichtung des Endabschnittes 11 ausgerichteten Längsschnitt zeigt, ist der Endabschnitt 11 in radialer Richtung durch einen Rillengrund 11a sowie ferner durch eine zur Laufstreifenoberfläche verlaufende Flanke 11b begrenzt. Der Rillengrund 11a schließt an den Rillengrund 10c des Hauptabschnittes 10 an und verläuft rampenartig unter einem spitzen Winkel ε von 30° bis 50°, insbesondere von 35° bis 45°, zur radialen Richtung und endet laufstreifeninnenseitig in radialer Richtung in einer Tiefe T₃ von 4,0 mm bis 5,0 mm. In der Tiefe T₃ schließt die Flanke 11b an den Rillengrund 11a an und verläuft im Wesentlichen gerade sowie vorzugsweise unter einem Winkel von bis zu 5°, insbesondere von etwa 2°, zur radialen Richtung. Alternativ kann die Flanke 11b auch in radialer Richtung verlaufen. Ferner kann, wie in Fig. 7 gezeigt, zwischen dem Rillengrund 11a und der Flanke 11b eine Übergangsrundung vorgesehen sein, welche den Rillengrund 11a und die Flanke 11b vorzugsweise knickfrei aneinander anbindet und im Querschnitt entlang eines Kreisbogens mit einem Radius von beispielsweise zirka 3,0 mm gerundet ist.

Wie Fig. 1 bis Fig. 4 zeigen, ist der Endabschnitt 12 bezüglich der Umfangsrichtung gegensinnig zum Endabschnitt 11 geneigt und erstreckt sich in Draufsicht unter einem spitzen Winkel δ von 30° bis 70°, insbesondere von 40° bis 55°, zur axialen Richtung. Der Endabschnitt 12 weist am Mündungsbereich zum Hauptabschnitt 10 an der Laufstreifenoberfläche in axialer Richtung eine Breite B₃ von 20% bis 50% der Breite B₂ (Fig. 6) des Hauptabschnittes 10 auf. Die Breite B₃ nimmt ausgehend vom Hauptabschnitt 10 zum laufstreifeninnseitigen Endbereich des Endabschnittes 12 kontinuierlich auf insbesondere 15% bis 30% der Breite B₂ des Hauptabschnittes ab.

Gemäß Fig. 8, welche einen in Erstreckungsrichtung ausgerichteten Längsschnitt durch den Endabschnitt 12 zeigt, ist der Endabschnitt 12 in radialer Richtung durch einen speziell gestalteten Rillengrund 12a sowie ferner durch eine zur Laufstreifenoberfläche verlaufende kurze Flanke 12b begrenzt. Der Rillengrund 12a setzt sich in radialer Richtung aus einem radial inneren Abschnitt 12'a, einem mittleren Abschnitt 12"a und einem radial äußeren Abschnitt 12"'a zusammen. Der radial innere Abschnitt 12'a schließt unmittelbar an den Rillengrund 10c des Hauptabschnittes 10 an und verläuft unter einem spitzen Winkel ϕ' von 20° bis 60°, insbesondere von bis zu 45°, zur radialen Richtung bis in eine Tiefe T₄ von 4,0 mm bis 5,0 mm, vorzugsweise von in etwa 4,6 mm. In der Tiefe T₄ schließt der mittlere Abschnitt 12"a an den radial inneren Abschnitt 12'a an, wobei der mittlere Abschnitt 12a" unter einem spitzen Winkel ϕ" < ϕ' von 15° bis 25°, vorzugsweise von in etwa 20°, zur radialen Richtung bis in eine Tiefe T₅ von 1,5 mm bis 2,5 mm, vorzugsweise von etwa 2,0 mm, verläuft. Der an den mittleren Abschnitt 12"a anschließende radial äußere Abschnitt 12"'a verläuft vorzugsweise zumindest im Wesentlichen parallel zur Laufstreifenoberfläche. Die Flanke 12b schließt an den radial äußeren Abschnitt 12"'a an und verläuft, wie in Fig. 8 gezeigt, in radialer Richtung oder unter einem Winkel von insbesondere bis zu 5° zur radialen Richtung zur Laufstreifenoberfläche. Ferner kann zwischen den Abschnitten 12'a und 12"a eine Übergangsrundung vorgesehen sein, welche die beiden Abschnitte 12'a, 12"a vorzugsweise knickfrei aneinander anbindet und im Querschnitt entlang eines Kreisbogens mit einem Radius von beispielsweise zirka 3,0 mm gerundet ist.

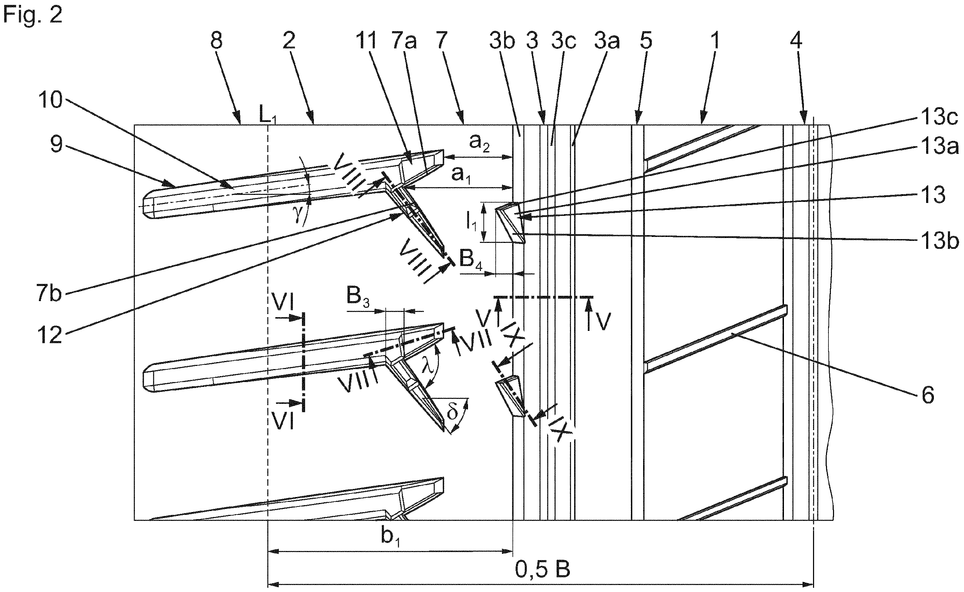

Bei der Ausführungsvariante gemäß Fig. 2 ist die Umfangsrippe 7 entlang der Umfangsrille 3 zusätzlich mit Aussparungen 13 versehen, wobei die Aussparungen 13 in axialer Richtung im Wesentlichen jeweils den Endabschnitten 12 der Querrillen 9 gegenüberliegen. Jede Aussparung 13 ist bei der gezeigten Ausführungsvariante in Draufsicht im Wesentlichen in Form eines Dreieckes ausgebildet, sodass jede Aussparung 13 in radialer Richtung durch eine im Wesentlichen dreieckige Bodenfläche 13a begrenzt ist. Jede Aussparung 13 ist ferner durch an die Bodenfläche 13a anschließende Begrenzungsflächen 13b, 13c begrenzt. Die Begrenzungsflächen 13b, 13c schließen jeweils an eine innerhalb der Umfangsrippe 7 liegende Seite des Dreieckes der Bodenfläche 13a an und verlaufen bei der gezeigten Ausführungsvariante jeweils unter einem Winkel von vorzugsweise bis zu 10° zur radialen Richtung. Die Begrenzungsflächen 13b, 13c können jedoch auch in radialer Richtung verlaufen.

Jede Aussparung 13 weist in Verlängerung der an der Laufstreifenoberfläche befindlichen Randkante der Umfangsrille 3 eine Länge l₁ von 5,0 mm bis 15,0 mm, insbesondere von 7,0 mm bis 10,0 mm, auf. Jede Aussparung 13 weist ferner bezogen auf eine Linie in Verlängerung der an der Laufstreifenoberfläche befindlichen jeweiligen Randkante der Umfangsrille 3 in axialer Richtung eine maximale Breite B₄ von 20% bis 40%, insbesondere von 25% bis 35%, der Breite B₁ der Umfangsrille 3 auf.

In Fig. 9 ist eine Schnittdarstellung, deren Schnittlinie IX-IX zumindest im Wesentlichen parallel zu einer der Seiten des Dreieckes der Bodenfläche 13a verläuft, gezeigt. Gemäß Fig. 9 ist die dreieckige Bodenfläche 13a derart gegenüber der Laufstreifenoberfläche geneigt, dass die Aussparung 13 entlang einer der innerhalb der Umfangsrippe 7 liegenden Seiten der Bodenfläche 13a, bei der gezeigten Ausführungsvariante entlang der Seite zur Begrenzungsfläche 13c, in radialer Richtung ihre kleinste Tiefe T₆ aufweist. Entlang der anderen innerhalb der Umfangsrippe 7 liegenden Seite der Bodenfläche 13a, bei der gezeigten Ausführungsvariante entlang der Seite zur Begrenzungsfläche 13b, nimmt die Tiefe der Aussparung 13 kontinuierlich zu, sodass die Aussparung 13 an ihrem einen in Umfangsrichtung liegenden Ende in radialer Richtung ihrer größte Tiefe T₇ aufweist. Die Tiefe T₆ beträgt vorzugsweise 3,5 mm bis 4,5 mm und die Tiefe T₇ beträgt vorzugsweise 5,0 mm bis 6,0 mm.

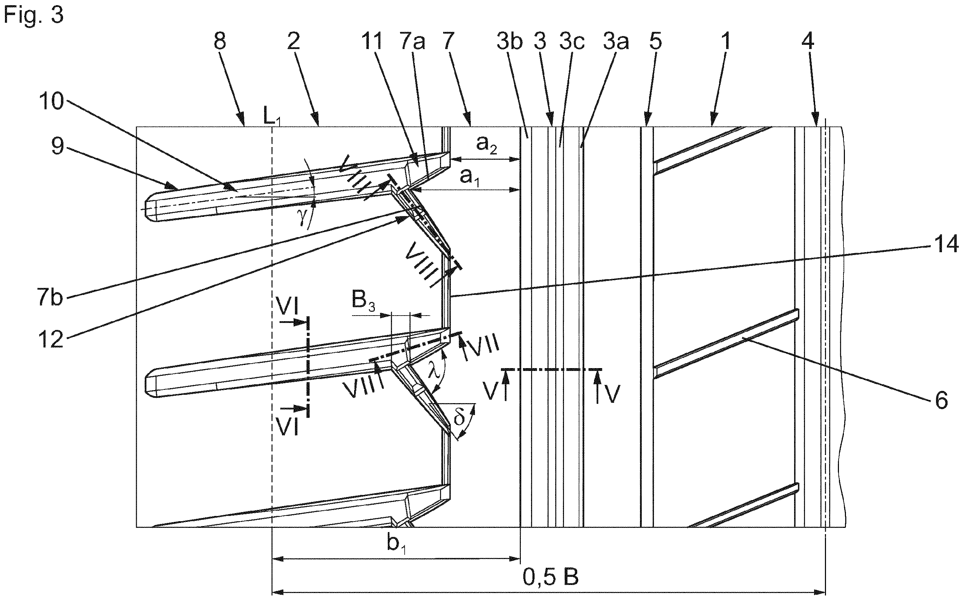

Die in Fig. 3 gezeigte Ausführungsvariante unterscheidet sich von jener gemäß Fig. 1 dadurch, dass zwischen den laufstreifeninnenseitigen Enden der Endabschnitte 11, 12 von zwei in Umfangsrichtung benachbarten Querrillen 9 jeweils eine seichte Nut 14 vorgesehen ist. Jede Nut 14 verläuft zumindest im Wesentlichen in Umfangsrichtung und weist in radialer Richtung eine Tiefe von vorzugsweise in etwa 1,0 mm und an der Laufstreifenoberfläche eine Breite von vorzugsweise in etwa 2,0 mm auf.

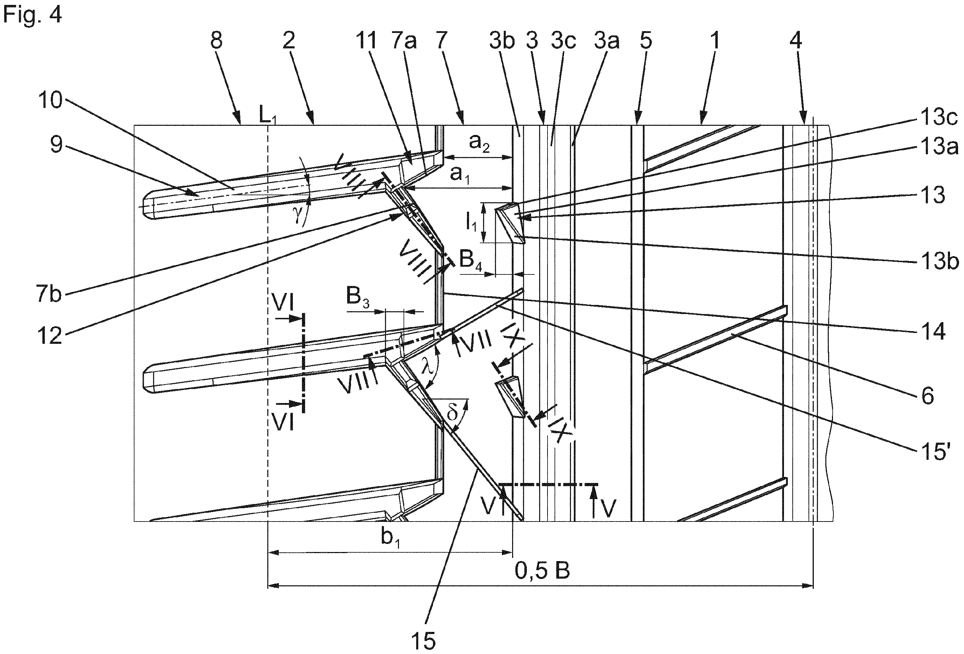

Fig. 4 zeigt eine weitere Ausführungsvariante, bei welcher zu Fig. 2 analoge Aussparungen 13 sowie zu Fig. 3 analoge Nuten 14 und zusätzlich seichte Nuten 15, 15' vorgesehen sind. Die Nuten 15, 15' erstrecken sich ausgehend von jeder zweiten Querrille 9 zumindest im Wesentlichen gerade in Verlängerung des jeweiligen Endabschnittes 11, 12 unter deren jeweiligen Winkeln γ, δ bis zur Umfangsrille 3. Jede Nut 15, 15' weist in radialer Richtung eine Tiefe und an der Laufstreifenoberfläche eine Breite auf, welche jeweils kleiner als die Breite und Tiefe der Nut 14 ist und vorzugsweise jeweils 0,5 mm beträgt.

Bei weiteren Ausführungsvarianten kann sich der Endabschnitt 11 in Draufsicht unter einem Winkel, welcher gegenüber dem gewählten Winkel γ des Hauptabschnittes 10 um insbesondere bis zu 5° abweicht, erstrecken, sodass die Rillenflanke 10a (Fig. 6) am Übergang des Hauptabschnittes 10 zum Endabschnitt 11 in Draufsicht einen "Knick" aufweist. Die Umfangsrippe 7 kann grundsätzlich mit Einschnitten schmalen Rillen und dergleichen strukturiert sein.

### Bezugsziffernliste

- 1: Profilband
- 2: Laufstreifenbereich
- 3: Umfangsrille
- 3a, 3b: Rillenflanke
- 3c: Rillengrund
- 4: Umfangsrille
- 5: Umfangsrille
- 6: Querrille
- 7: Umfangsrippe
- 7a, 7b: Begrenzungskante
- 8: Laufstreifenband
- 9: Querrille
- 10: Hauptabschnitt
- 10a, 10b: Rillenflanke
- 10c: Rillengrund
- 11, 12: Endabschnitt
- 11a, 12a: Rillengrund
- 11b, 12b: Flanke
- 12a', 12a", 12a"': Abschnitt
- 13: Aussparung
- 13a: Bodenfläche
- 13b, 13c: Begrenzungsfläche
- 14, 15, 15': Nut
- a₁, a₂: Abstand
- b₁: Breite
- B: Breite
- B_{i, i =1-4}: Breite
- L₁: Linie
- l₁: Länge
- T_{i, i=1-7}: Tiefe
- α, β, γ, δ, ε, λ, ϕ', ϕ": Winkel

## Patentansprüche

1. Fahrzeugluftreifen in Radialbauart mit einem Laufstreifen mit einem durch eine Umfangsrille (3) laufstreifeninnenseitig begrenzten schulterseitigen Laufstreifenbereich (2), welcher 15% bis 30% der Breite (B) der Bodenaufstandsfläche einnimmt und eine an die Umfangsrille (3) angrenzende Umfangsrippe (7) sowie ein durch Querrillen (9) blockartig strukturiertes schulterseitiges Laufstreifenband (8) umfasst, wobei jede Querrille (9) in axialer Richtung in einem Abstand (a₂) von vorzugsweise mindestens 8,0 mm vor der Umfangsrille (3) endet und wobei jede Querrille (9) einen innerhalb der und über die Bodenaufstandsfläche hinaus verlaufenden Hauptabschnitt (10) aufweist,
**dadurch gekennzeichnet,**
**dass** jede Querrille (9) zwei jeweils an das laufstreifeninnenseitige Ende ihres Hauptabschnittes (10) anschließende Endabschnitte (11, 12) aufweist, welche der Querrille (9) in Draufsicht eine Y-artige Gestalt verleihen, wobei die Umfangsrippe (7) in die zwischen den Endabschnitten (11, 12) einer Querrille (9) liegenden Bereiche in Draufsicht jeweils dreieckförmig hineinragt.

2. Fahrzeugluftreifen nach Anspruch 1, **dadurch gekennzeichnet, dass** der Hauptabschnitt (10) in axialer Richtung in einem Abstand (a₁) von 20,0 mm bis 30,0 mm vor der die Umfangsrippe (7) laufstreifeninnenseitig begrenzenden Umfangsrille (3) endet.

3. Fahrzeugluftreifen nach Anspruch 1 oder 2, **dadurch gekennzeichnet, dass** die Endabschnitte (11, 12) bezüglich der Umfangsrichtung gegensinnig geneigt sind.

4. Fahrzeugluftreifen nach einem der Ansprüche 1 bis 3, **dadurch gekennzeichnet, dass** jeder dreieckförmige Bereich der Umfangsrippe (7) an der Laufstreifenoberfläche zur jeweiligen Querrille (9) durch zwei Begrenzungskanten (7a, 7b) begrenzt ist, welche einen Winkel (λ), der 60° bis 120°, vorzugsweise 80° bis 100°, und besonders bevorzugt 85° bis 95°, beträgt, einschließen.

5. Fahrzeugluftreifen nach einem der Ansprüche 1 bis 4, **dadurch gekennzeichnet, dass** die beiden Endabschnitte (11, 12) in axialer Richtung in im Wesentlichen gleich großen Abständen (a₂) vor der die Umfangsrippe (7) laufstreifeninnenseitig begrenzenden Umfangsrille (3) enden.

6. Fahrzeugluftreifen nach einem der Ansprüche 1 bis 5, **dadurch gekennzeichnet, dass** die Tiefe jedes Endabschnittes (11, 12) zum laufstreifeninnenseitigen Ende abnimmt.

7. Fahrzeugluftreifen nach einem der Ansprüche 1 bis 6, **dadurch gekennzeichnet, dass** sich einer der Endabschnitte (11) zumindest im Wesentlichen in Fortsetzung des Hauptabschnittes (10) erstreckt.

8. Fahrzeugluftreifen nach Anspruch 7, **dadurch gekennzeichnet, dass** der sich zumindest im Wesentlichen in Fortsetzung des Hauptabschnittes (10) erstreckende Endabschnitt (11) einen unter einem Winkel (ε) von 30° bis 50°, insbesondere von 35° bis 45°, zur radialen Richtung verlaufenden Rillengrund (11a) aufweist, welcher Richtung Endabschnittende ansteigt.

9. Fahrzeugluftreifen nach Anspruch 8, **dadurch gekennzeichnet, dass** die Tiefe (T₃) am laufstreifeninnseitigen Ende des Rillengrundes (11a) 4,0 mm bis 5,0 mm beträgt.

10. Fahrzeugluftreifen nach einem der Ansprüche 7 bis 9, **dadurch gekennzeichnet, dass** der sich zumindest im Wesentlichen in Fortsetzung des Hauptabschnittes (10) erstreckende Endabschnitt (11) eine an das laufstreifeninnseitige Ende des Rillengrundes (11a) anschließende Flanke (11b) aufweist, welche zur radialer Richtung unter einem Winkel von bis zu 5°, insbesondere von bis zu 2°, verläuft.

11. Fahrzeugluftreifen nach einem der Ansprüche 1 bis 10, **dadurch gekennzeichnet dass** der andere Endabschnitt (12) einen Rillengrund (12a) mit einem an den Rillengrund (10c) des Hauptabschnittes (10) anschließenden radial inneren Abschnitt (12'a), einen mittleren Abschnitt (12"a) und einen radial äußeren Abschnitt (12"'a) aufweist, wobei der radial innere Abschnitt (12a') unter einem Winkel (ϕ') von 20° bis 60°, insbesondere bis zu 45°, und der mittlere Abschnitt (12"a) unter einem Winkel (ϕ") von 15° bis 25°, vorzugsweise bis zu 20°, zur radialen Richtung verläuft.

12. Fahrzeugluftreifen nach Anspruch 11, **dadurch gekennzeichnet, dass** der radial äußere Abschnitt (12"'a) in einer Tiefe (T₅) von 1,5 mm bis 2,5 mm, vorzugsweise von 2,0 mm, zumindest im Wesentlichen parallel zur Laufstreifenoberfläche verläuft.

13. Fahrzeugluftreifen nach einem der Ansprüche 1 bis 12, **dadurch gekennzeichnet, dass** die Umfangsrippe (7) entlang der Umfangsrille (3) mit Aussparungen (13) versehen ist, welche den Querrillen (10) gegenüberliegen und in Draufsicht jeweils im Wesentlichen in Form eines Dreieckes ausgebildet sind.

14. Fahrzeugluftreifen nach Anspruch 13, **dadurch gekennzeichnet, dass** jede Aussparung (13) eine in Draufsicht im Wesentlichen dreieckige Bodenfläche (13a) aufweist, welche gegenüber der Laufstreifenoberfläche geneigt ist, wobei die Aussparung (13) entlang der einen innerhalb der Umfangsrippe (7) liegenden Seite der Bodenfläche (13a) in radialer Richtung ihre geringste Tiefe, welche 3,5 mm bis 4,5 mm beträgt, aufweist.

## Claims

1. Pneumatic vehicle tyre of a radial type of construction comprising a tread with a shoulder-side tread region (2), which is bounded on the inner side of the tread by a circumferential groove (3), takes up 15% to 30% of the width (B) of the ground contact area and comprises a circumferential rib (7) adjoining the circumferential groove (3) and also a shoulder-side tread strip (8) structured in the manner of blocks by transverse grooves (9), each transverse groove (9) ending at a distance (a₂) of preferably at least 8.0 mm in the axial direction from the circumferential groove (3) and each transverse groove (9) having a main portion (10) running within and beyond the ground contact area,
**characterized**
**in that** each transverse groove (9) has two end portions (11, 12), which respectively adjoin the end of their main portion (10) on the inner side of the tread and give the transverse groove (9) a Y-like shape in plan view, the circumferential rib (7) reaching into the regions lying between the end portions (11, 12) of a transverse groove (9) in each case in a triangular manner in plan view.

2. Pneumatic vehicle tyre according to Claim 1, **characterized in that** the main portion (10) ends at a distance (a₁) of 20.0 mm to 30.0 mm in the axial direction before the circumferential groove (3) bounding the circumferential rib (7) on the inner side of the tread.

3. Pneumatic vehicle tyre according to Claim 1 or 2, **characterized in that** the end portions (11, 12) are inclined oppositely with respect to the circumferential direction.

4. Pneumatic vehicle tyre according to one of Claims 1 to 3, **characterized in that** each triangular region of the circumferential rib (7) is bounded at the surface of the tread in relation to the respective transverse groove (9) by two bounding edges (7a, 7b), which form an angle (λ), which is 60° to 120°, preferably 80° to 100°, and particularly preferably 85° to 95°.

5. Pneumatic vehicle tyre according to one of Claims 1 to 4, **characterized in that** the two end portions (11, 12) end at substantially equal distances (a₂) in the axial direction before the circumferential groove (3) bounding the circumferential rib (7) on the inner side of the tread.

6. Pneumatic vehicle tyre according to one of Claims 1 to 5, **characterized in that** the depth of each end portion (11, 12) decreases towards the end on the inner side of the tread.

7. Pneumatic vehicle tyre according to one of Claims 1 to 6, **characterized in that** one of the end portions (11) extends at least substantially as a continuation of the main portion (10).

8. Pneumatic vehicle tyre according to Claim 7, **characterized in that** the end portion (11) that extends at least substantially as a continuation of the main portion (10) has a groove base (11a) which runs at an angle (ε) of 30° to 50°, in particular of 35° to 45°, in relation to the radial direction and rises in the direction of the end of the end portion.

9. Pneumatic vehicle tyre according to Claim 8, **characterized in that** the depth (T₃) at the end of the groove base (11a) on the inner side of the tread is 4.0 mm to 5.0 mm.

10. Pneumatic vehicle tyre according to one of Claims 7 to 9, **characterized in that** the end portion (11) that extends at least substantially as a continuation of the main portion (10) has a flank (11b) which adjoins the end of the groove base (11a) on the inner side of the tread and runs at an angle of up to 5°, in particular of up to 2°, in relation to the radial direction.

11. Pneumatic vehicle tyre according to one of Claims 1 to 10, **characterized in that** the other end portion (12) has a groove base (12a) with a radially inner portion (12'a), adjoining the groove base (10c) of the main portion (10), a middle portion (12''a) and a radially outer portion (12'''a), the radially inner portion (12a') running at an angle (ϕ') of 20° to 60°, in particular up to 45°, and the middle portion (12''a) running at an angle (ϕ'') of 15° to 25°, preferably up to 20°, in relation to the radial direction.

12. Pneumatic vehicle tyre according to Claim 11, **characterized in that** the radially outer portion (12'''a) runs at a depth (T₅) of 1.5 mm to 2.5 mm, preferably of 2.0 mm, at least substantially parallel to the surface of the tread.

13. Pneumatic vehicle tyre according to one of Claims 1 to 12, **characterized in that** the circumferential rib (7) is provided along the circumferential groove (3) with clearances (13), which lie opposite the transverse grooves (10) and in plan view are respectively formed substantially in the form of a triangle.

14. Pneumatic vehicle tyre according to Claim 13, **characterized in that** each clearance (13) has a bottom area (13a) which is substantially triangular in plan view and is inclined with respect to the surface of the tread, the clearance (13) having its smallest depth, which is 3.5 mm to 4.5 mm, in the radial direction along the side of the bottom area (13a) that lies within the circumferential rib (7).

## Revendications

1. Pneumatique de véhicule du type radial avec une bande de roulement dotée d'une zone de bande de roulement côté épaulement (2) limitée sur le côté intérieur de la bande de roulement par une rainure périphérique (3) et qui occupe 15 % à 30 % de la largeur (B) de la face de contact au sol et qui comprend une nervure périphérique (7) adjacente à la rainure périphérique (3) ainsi qu'une bande (8) de la bande de roulement côté épaulement structurée en forme de blocs par des rainures transversales (9), dans lequel chaque rainure transversale (9) se termine en direction axiale à une distance (a₂) de préférence d'au moins 8,0 mm avant la rainure périphérique (3) et dans lequel chaque rainure transversale (9) présente une partie principale (10) s'étendant à l'intérieur et au-delà de la face de contact au sol,
**caractérisé en ce que** chaque rainure transversale (9) présente deux parties d'extrémité (11, 12) se raccordant respectivement à l'extrémité de sa partie principale (10) située sur le côté intérieur de la bande de roulement,
qui confèrent à la rainure transversale (9) dans une vue en plan une forme en Y, dans lequel la nervure périphérique (7) pénètre dans les zones, respectivement de forme triangulaire dans une vue en plan, situées entre les parties d'extrémité (11, 12) d'une rainure transversale (9).

2. Pneumatique de véhicule selon la revendication 1, **caractérisé en ce que** la partie principale (10) se termine en direction axiale à une distance (a₁) de 20,0 mm à 30,0 mm avant la rainure périphérique (3) limitant la nervure périphérique (7) du côté intérieur de la bande de roulement.

3. Pneumatique de véhicule selon la revendication 1 ou 2, **caractérisé en ce que** les parties d'extrémité (11, 12) sont inclinées en sens contraire par rapport à la direction périphérique.

4. Pneumatique de véhicule selon l'une quelconque des revendications 1 à 3, **caractérisé en ce que** chaque zone triangulaire de la nervure périphérique (7) est limitée sur la surface de la bande de roulement vers la rainure transversale respective (9) par deux faces de limitation (7a, 7b), qui forment un angle (λ), qui vaut 60° à 120°, de préférence 80° à 100°, et de préférence encore 85° à 95°.

5. Pneumatique de véhicule selon l'une quelconque des revendications 1 à 4, **caractérisé en ce que** les deux parties d'extrémité (11, 12) se terminent en direction axiale à des distances essentiellement égales (a₂) avant la rainure périphérique (3) limitant la nervure périphérique (7) du côté intérieur de la bande de roulement.

6. Pneumatique de véhicule selon l'une quelconque des revendications 1 à 5, **caractérisé en ce que** la profondeur de chaque partie d'extrémité (11, 12) diminue vers l'extrémité du côté intérieur de la bande de roulement.

7. Pneumatique de véhicule selon l'une quelconque des revendications 1 à 6, **caractérisé en ce qu'**une des parties d'extrémité (11) s'étend au moins essentiellement dans le prolongement de la partie principale (10).

8. Pneumatique de véhicule selon la revendication 7, **caractérisé en ce que** la partie d'extrémité (11) s'étendant au moins essentiellement dans le prolongement de la partie principale (10) présente un fond de rainure (11a) s'étendant sous un angle (ε) de 30° à 50°, en particulier de 35° à 45°, par rapport à la direction radiale, et qui monte en direction de l'extrémité de la partie d'extrémité.

9. Pneumatique de véhicule selon la revendication 8, **caractérisé en ce que** la profondeur (T₃) vaut 4,0 mm à 5,0 mm à l'extrémité du fond de rainure (11a) du côté intérieur de la bande de roulement.

10. Pneumatique de véhicule selon l'une quelconque des revendications 7 à 9, **caractérisé en ce que** la partie d'extrémité (11) s'étendant au moins essentiellement dans le prolongement de la partie principale (10) présente un flanc (11b) se raccordant à l'extrémité du fond de rainure (11a) du côté intérieur de la bande de roulement, et qui s'étend sous un angle valant jusqu'à 5°, en particulier jusqu'à 2°, par rapport à la direction radiale.

11. Pneumatique de véhicule selon l'une quelconque des revendications 1 à 10, **caractérisé en ce que** l'autre partie d'extrémité (12) présente un fond de rainure (12a) avec une partie radialement intérieure (12'a) se raccordant au fond de rainure (10c) de la partie principale (10), une partie moyenne (12"a) et une partie radialement extérieure (12"'a), dans lequel la partie radialement intérieure (12'a) s'étend sous un angle (ϕ') de 20° à 60°, en particulier jusqu'à 45°, et la partie moyenne (12"a) s'étend sous un angle (ϕ") de 15° à 25°, de préférence jusqu'à 20°, par rapport à la direction radiale.

12. Pneumatique de véhicule selon la revendication 11, **caractérisé en ce que** la partie radialement extérieure (12"'a) s'étend à une profondeur (T₅) de 1,5 mm à 2,5 mm, de préférence de 2,0 mm, au moins essentiellement parallèlement à la surface de la bande de roulement.

13. Pneumatique de véhicule selon l'une quelconque des revendications 1 à 12, **caractérisé en ce que** la nervure périphérique (7) est dotée le long de la rainure périphérique (3) de découpes (13), qui font face aux rainures transversales (10) et sont réalisées dans une vue en plan essentiellement en forme de triangle.

14. Pneumatique de véhicule selon la revendication 13, **caractérisé en ce que** chaque découpe (13) présente dans une vue en plan une face de fond (13a) essentiellement triangulaire, qui est inclinée par rapport à la surface de la bande de roulement, dans lequel la découpe (13) présente le long d'un côté de la face de fond (13a) situé à l'intérieur de la nervure périphérique (7) en direction radiale sa plus faible profondeur, qui vaut 3,5 mm à 4,5 mm.
